# EUROPÄISCHE PATENTSCHRIFT

(11) **EP 3 238 915 B1**
(45) Veröffentlichungstag und Bekanntmachung des Hinweises auf die Patenterteilung: **18.01.2023**
(21) Anmeldenummer: 17171333.2
(22) Anmeldetag: 28.11.2014
(51) Int. Cl.: B29C 64/153, B23K 9/04, B23K 10/02, B23K 15/00, G01J 5/02, B23K 26/00, B23K 26/03, B23K 26/08, B23K 26/14, B23K 26/34, B23K 26/342, B23K 26/70, B23P 23/04, B23Q 17/22, B23Q 3/155, G01J 5/00, G05B 19/042, G05B 19/29

(54) **WERKZEUGMASCHINE MIT EINER MESSVORRICHTUNG, UND AUFTRAGSSCHWEISSVERFAHREN**
MACHINE TOOL WITH A MEASURING DEVICE, AND ADDITIVE MANUFACTURUNG METHOD
MACHINE-OUTIL AVEC UN DISPOSITIF DE MESURE, ET PROCÉDÉ D'APPORT DE MÉTAL PAR SOUDURE

(30) Priorität: 29.11.2013 DE 102013224649
(43) Veröffentlichungstag der Anmeldung: 01.11.2017
(62) Teilanmeldung aus: 14805580.9
(73) Patentinhaber: DMG MORI Ultrasonic Lasertec GmbH, 55758 Stipshausen (DE)
(72) Erfinder: HILDEBRAND, Peter, 87459 Pfronten (DE); REISACHER, Martin, 87435 Kempten (DE)
(74) Vertreter: Beetz & Partner mbB

(56) Entgegenhaltungen:
- EP-A1- 1 859 893
- DE-A1-102012 221 218
- US-A1- 2012 100 031
- US-A1- 2013 168 902
- US-B1- 7 020 539

## Beschreibung

Die Erfindung betrifft eine Werkzeugmaschine und ein Auftragsschweißverfahren.

Das Messen und Protokollieren kann in thermisch arbeitenden Maschinen angewendet werden, etwa in Auftragsschweißmaschinen. Bisher wird das Auftragsschweißen als konstruktives Arbeitsverfahren vorrangig zur Beschichtung von Gegenständen mit gewünschten Überzügen oder für endkonturnahe Reparaturschweißungen verwendet. Vor allem problematisch für die komplette Fertigung von Werkstücken mittels Laserauftragsschweißens sind die folgenden Aspekte:
Das Auftragsschweißen an sich ist ein konstruktives Verfahren mit vergleichsweise geringer Maßgenauigkeit. Schon rein durch die Ungenauigkeiten des Aufschweißvorgangs für sich alleine muss mit Toleranzen gerechnet werden, die 1 mm und mehr betragen können.

Darüber hinaus ist das Auftragsschweißen ein "heißes" Verfahren. Das zu verschweißende Material ist flüssig und hat in der Regel eine Temperatur von über 1500 °C. Bei Beschichtungen und lokalen Reparaturen erfolgt der Materialauftrag auf relativ große Wärmesenken, sodass das aufgetragene Material sehr schnell abkühlt. Wenn dagegen ein Werkstück vollständig gefertigt werden soll, sind in der Nähe des aufgeschweißten Materials keine kalten Wärmesenken vorhanden, sondern lediglich allenfalls ihrerseits vorher aufgeschweißte Werkstückteile, die ihrerseits noch warm sind. Dann kühlt das aufgeschweißte Material zwar noch vergleichsweise schnell (bei Eisen/Stahl) auf unter Rotglut (unter 500 °C) ab, aber es stellen sich doch relativ hohe Werkstücktemperaturen ein. Sie können bei 100 bis 200 °C oder mehr liegen. Der Wärmeausdehnungskoeffizient von Eisen ist 10⁻⁵/°C. Ein Temperaturgang von beispielsweise 300°C zwischen Fertigungstemperatur (etwa über 300 °C) eines Werkstücks und Verwendungstemperatur (etwa Zimmertemperatur) führt zu einer Größenveränderung von 3 × 10⁻³ oder 3 ‰. Bei einer Gesamtabmessung eines Werkstücks von beispielsweise 100 mm beträgt die Temperaturvarianz der Dimension dann 300 µm. Dies sind Größenordnungen, die in vielen Anwendungen völlig inakzeptabel sind.

Die US 7020539 B1 (Basis für den Oberbegriff der Ansprüche 1 und 5) beschreibt ein System und ein Verfahren zur Herstellung oder Reparatur eines Teils. Das System weist eine Auftragsstation auf, die dazu dient, aufeinanderfolgende zweidimensionale Materialschichten aufzutragen, um das dreidimensionale Teil herzustellen. Es weist auch eine Bearbeitungsstation auf, um zumindest einen Teil einer oder mehrerer der aufgetragenen zweidimensionalen Schichten zu entfernen. Der Auftrag kann mittels Laserauftragschweißen geschehen. Es kann ein mehrachsiger Roboter vorgesehen sein, um die Ablagerung zu vollziehen. Die Bearbeitungsstation weist eine Mehrachs-Bearbeitungsmaschine und einen automatischen Werkzeugwechsler auf.

Der Artikel "Laser-Einheit macht Auftragsschweißen auf Bearbeitungszentrum möglich" von Nowotny und anderen in "MM Das Industriemagazin", 17/2009, Seite 42 ff., beschreibt eine Laserbearbeitungsoptik, die über einen Steilkegel in die Frässpindel einer CNC-Maschine eingesetzt wird. In den Laser-Brennfleck wird Schweißgut durch eine Pulverdüse zugeführt. In der gleichen Maschine kann das Werkstück gefräst werden.

DE-A-10 2012 221 218 offenbart eine Vorrichtung zur Regelung der Leistung eines Materialbearbeitungslasers in Echtzeit, bei der die aus einer momentanen Leistung des Lasers resultierende Temperatur der Auftreffstelle des Lasers gemessen und anhand des Messwerts die Laserleistung angepasst wird.

Aufgabe der Erfindung ist es, eine Werkzeugmaschine und ein Auftragsschweißverfahren anzugeben, die eine präzise Fertigung von Werkstücken mittels Laserauftragsschweißens erlauben.

Diese Aufgabe wird mit den Merkmalen der unabhängigen Patentansprüche 1 und 5 gelöst. Abhängige Patentansprüche sind auf bevorzugte Ausführungsformen der Erfindung gerichtet.

Eine Werkzeugmaschine hat eine Maschinensteuerung, einen Maschinenrahmen, einen Werkstücktisch, einer vorzugsweise nach einer Norm (SK, HSK) ausgebildeten Werkzeugaufnahme, die das Antriebsende einer Spindel sein kann, mehrere translatorische und/oder rotatorische Achsen zur Einstellung einer relativen Lage zwischen Werkstücktisch und Werkzeugaufnahme, ein Werkzeugmagazin für ein oder mehrere materialabtragende, insbesondere spanende Werkzeuge, einen Werkzeugwechselmechanismus zum automatischen Verbringen von Werkzeugen zwischen Werkzeugaufnahme und Werkzeugmagazin, der einen automatisch arbeitenden Arm zum Verbringen des Werkzeugs zwischen Werkzeugaufnahme und Werkzeugmagazin aufweisen kann, einen in die Werkzeugaufnahme einsetzbaren Auftragsschweißkopf, und einer Lagereinrichtung zum Lagern des Auftragsschweißkopfs jenseits der Werkzeugaufnahme, wobei die Lagereinrichtung jenseits des Werkzeugmagazins vorgesehen sein kann. Die Maschine weist eine Messvorrichtung wie oben beschrieben auf.

Der automatische Wechsel zwischen Auftragsschweißen und Materialabtrag führt zu einem zügigen Arbeitsfortschritt, der gut vorhersagbar ist, so dass auch thermische Verhältnisse und Effekte besser vorhersagbar und damit in der Fertigungsplanung besser antizipierbar sind.

Die Lagereinrichtung kann eine Verfahreinrichtung aufweisen zum translatorischen und/oder rotatorischen Verfahren des gelagerten Auftragsschweißkopfs zwischen einer Parkposition und einer Wechselposition, die von der Werkzeugaufnahme angefahren werden kann zum Aufnehmen bzw. Ablegen des Auftragsschweißkopfs.

Der Auftragschweißkopf weist eine vorzugsweise einen Laserstrahl verwendende Verschweißeinrichtung auf, eine Schweißmaterialzufuhr zum Zuführen von Schweißmaterial (Metall, Keramik, ...) zur Auftragsschweißstelle, wobei die Zufuhr zum Zuführen eines Drahts oder von Materialpartikeln mit einem Fluidstrom ausgelegt sein kann, eine Schutzgaszufuhr, einen flexiblen Leitungsschlepp zum Zuführen von Laserlicht und/oder Schweißgasmaterial und/oder Schutzgas und/oder elektrischer Energie und/oder elektrischen Signalen. Es kann weiterhin eine ortsauflösende Temperatursensorik vorgesehen sein.

Nachfolgend werden bezugnehmend auf die Zeichnungen einzelne Ausführungsformen der Erfindung beschrieben. Es zeigen
Figur 1 schematisch eine Werkzeugmaschine,
Figur 2 schematisch einen Auftragsschweißkopf,
Figur 3 schematisch ein Verfahren zur Datenerstellung für das Auftragsschweißen,
Figur 4 schematisch Optionen zu Figur 3,
Figur 5 eine Werkstücktemperierung.

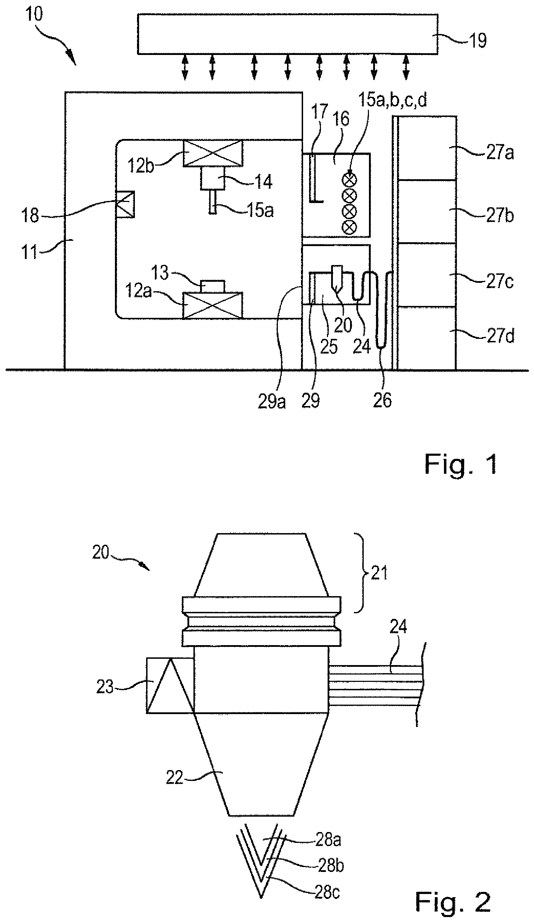

Figur 1 zeigt eine erfindungsgemäße Werkzeugmaschine. Sie weist allgemein eine Maschinensteuerung 19 auf, die mit einer nicht gezeigten Speichereinrichtung mit verbunden sein kann. Die Maschinensteuerung kann ein einzelner Rechner sein oder ein in geeigneter Weise verbundenes Verbund mehrerer Rechner und/oder sonstiger (digitaler) Einheiten. Sie können, müssen aber nicht alle "vor Ort" nahe bei der Maschine stehen und über geeignete Einrichtungen (Netz, drahtlos) miteinander verbunden sein. Die Maschinensteuerung 19 steuert die maßgeblichen Funktionalitäten der Maschine und kann hierzu Daten von Sensoren 18 in der Maschine empfangen und Steuerungssignale für den Betrieb der Maschine ausgeben.

Die Maschinensteuerung 19 arbeitet nach Maßgabe von Arbeitsdaten, die zur Ansteuerung der Maschine für die Fertigung eines konkreten Werkstücks erzeugt wurden. Die Arbeitsdaten können ein ausführbares Programm sein oder nicht ausführbare Daten, die von einem in der Steuerung laufenden Programm abgerufen werden.

Die Maschine weist einen Maschinenrahmen 11 auf, an dem in der Regel mittelbar über dazwischenliegende Stellachsen 12a, 12b einerseits ein Werkstücktisch 13 und andererseits eine Werkzeugaufnahme 14 angebracht sind. Die Achsen 12a, 12b können mehrere translatorische (x, y, z) oder rotatorische (ϕ, λ, θ) Achsen aufweisen, die nach Maßgabe der Maschinensteuerung 19 einstellbar sind. Die Auslegung kann so sein, dass die Werkzeugaufnahme 14 über ein, zwei oder drei translatorische Achsen am Maschinenrahmen befestigt ist, während der Werkstücktisch 13 über eine, zwei oder drei rotatorische Achsen am Maschinenrahmen befestigt ist. Werkzeugmaschinen weisen in der Regel (nicht gezeigte) abgeschlossene Kabinen auf, die Spanflug und ähnliches in die Umgebung unterbinden.

Die Werkzeugaufnahme 14 ist vorzugsweise nach einer Norm ausgebildet, insbesondere gemäß SK oder gemäß HSK. Sie kann das abtriebseitige Ende einer Spindel sein. Die Spindel kann ein in die Werkzeugaufnahme einzusetzendes Werkzeug 15 in Drehbewegung versetzen. Die Systemauslegung kann so sein, dass Drehzahlen von 10.000 Umdrehungen pro Minute und mehr verwendet werden. Das in die Werkzeugaufnahme 14 einzusetzende Werkzeug 15 kann ein konventionelles Abtragswerkzeug sein (Fräser, Bohrer, Drehmeißel), oder kann eher dem Spezialbearbeitungsbereich zuordenbar sein (Laserabtragswerkzeug, Ultraschallwerkzeug oder ähnliches).

Viele unterschiedliche Werkzeuge 15a, 15b,c,d,... können in einem Werkzeugmagazin 16 gelagert sein. Ein unter Steuerung der Steuerung 19 stehender automatischer Werkzeugwechselmechanismus ist vorgesehen, um Werkzeuge 15 aus dem Magazin 16 zu entnehmen und der Spindel/Werkzeugaufnahme 14 zuzuführen und umgekehrt. Der Werkzeugwechselmechanismus wird in der Regel einen separaten Werkzeugwechsler 17 aufweisen, der Werkzeuge zwischen einer geeignet positionierten Werkzeugaufnahme 14 der Maschine und den Lagerpositionen im Magazin 16 hin- und hertransportiert. In einer einfachen Ausführungsform kann der Mechanismus aber auch lediglich in einer geeigneten Ansteuerung der Werkzeugaufnahme 14 dahingehend bestehen, dass sie ein zugängliches Werkzeug in einer bekannten Position anfährt und aufnimmt bzw. ablegt.

Darüber hinaus weist die Maschine einen Auftragsschweißkopf 20 auf. Auch er ist in die Werkzeugaufnahme 14 einsetzbar bzw. aus ihr herausnehmbar. Diese Maßnahmen sind unter Steuerung der Maschinensteuerung 19 automatisch durchführbar. Es ist eine Lagereinrichtung 25 vorgesehen, um bei Nichtverwendung des Auftragsschweißkopfs 20 diesen jenseits der Werkzeugaufnahme 14 lagern zu können. Die Lagereinrichtung 25 kann separat vom Werkzeugmagazin 16 vorgesehen sein.

Auch für den Auftragsschweißkopf 20 ist ein automatisches Aufnehmen und Ablegen vorgesehen. Auch er kann mit einem separaten Wechselarm zwischen Lagereinrichtung 25 und einer von der Werkzeugaufnahme 14 anfahrbaren Position verbracht werden. In einer anderen Ausführungsform ist es möglich, eine Verfahreinrichtung 29 vorzusehen, die die Halterung der Lagereinrichtung 25 zwischen einer Wechselposition und einer Parkposition verfährt. Die Wechselposition befindet sich in einer von der Werkzeugaufnahme 14 zugänglichen Position, während die Parkposition sich in einer zurückgezogenen Position befindet. Die Verfahreinrichtung kann einen Arm aufweisen, an dessen Ende die Halterung des Auftragsschweißkopfsliegt und der translatorisch und/oder rotatorisch zwischen den genannten Positionen verfahren wird. Auch er steht unter Steuerung der Maschinensteuerung 19.

Es kann eine vorzugsweise verfahrbare Abschirmung 29a vorgesehen sein, die bspw. als öffen- und schließbare Tür ausgebildet sein kann, um den in der Lagereinrichtung 25 gelagerten Auftragsschweißkopf 20 gegen Prozesseinflüsse abzuschirmen. Spanende Werkstückbearbeitungen werden sicher zu Spänen in der Maschinenkabine führen. Darüber hinaus können Kühlmittel vorgesehen sein, die einen abtragenden Prozess sehr "schmutzig" machen, sodass die Abschirmung der nicht benötigten Werkzeuge, insbesondere des Auftragsschweißkopfs, sinnvoll sind.

Der Auftragsschweißkopf 20 wird in der Regel einen Leitungsschlepp 24 aufweisen, um benötigte Medien und elektrische Energie und Signale zuzuführen bzw. abzuführen. Der Leitungsschlepp 24, 26 kann einen Lichtwellenleiter aufweisen zum Zuführen eines extern generierten Laserlichts als Energiezufuhr zum Erreichen der Schweißtemperatur, eine Materialzuführleitung zum Zuführen des zu verschweißenden Materials, wobei diese Leitung eine Fluidförderleitung sein kann, mittels derer beispielsweise Materialpulver (Metall, Eisen, Stahl, Keramik, ...) in einem geeigneten Fluid, etwa Inertgas, in geeigneten Raten/Mengen/Geschwindigkeiten der Arbeitsstelle zugeführt werden, eine Schutzgasleitung zur separaten Zuführung von Schutzgas zum Schützen des Prozesses gegen Umwelteinflüsse, Späne u. ä., elektrische Leitungen für Energie für Verbraucher im Auftragsschweißkopf, Signalleitungen für Steuerungssignale für steuerbare Komponenten im Auftragsschweißkopf, Signalleitungen für Signale von Komponenten im Auftragsschweißkopf, etwa Sensoren 23 oder sonstige signalisierende Komponenten.

Die vorhandenen Leitungen können zu einem gemeinsamen Leitungsschlepp (intern 24, extern 26) zusammengefasst sein, der ausreichend lang ist und mit dem Auftragsschweißkopf 20 mitgeführt wird. Statt als fluidgefördertes Pulver kann das zu verschweißende Material auch als Draht zugeführt werden.

Für das Auftragsschweißen kann Sensorik 23 vorhanden sein, die die oben beschriebene Messvorrichtung ganz oder teilweise bilden kann. Die Messvorrichtrung/Sensorik 23 kann am Auftragsschweißkopf 20 angebracht sein oder ganz oder teilweise separat davon vorgesehen sein. Die Sensorik kann zur ortsauflösenden Temperaturmessung geeignet sein. Die Ortsauflösung kann so gewählt werden, dass die Temperatur der Schweißschmelze und benachbarter Werkstückbereiche separate zuverlässig bestimmt werden kann. Die Ortsauflösung kann im Millimeterbereich liegen und besser als 2mm oder besser als 1mm oder besser als 500 µm sein. Sie kann gröber als 10 µm oder gröber als 20 µm sein. Die Temperatursensorik kann beispielsweise eine gepixelte Wärmebildkamera aufweisen, die Signale fortlaufend erzeugt und über Leitungen, etwa im Leitungsschlepp 24, letztlich der Steuerung 19 zuführt.

Die Sensorik kann darüber hinaus Positions- bzw. Geometriesensorik aufweisen, die in Echtzeit gefertigte Werkstückteile vermisst, vorzugsweise dreidimensional, und diese Daten ebenfalls ggf. über den Leitungsschlepp 24 schließlich der Steuerung 19 zuführt. In einer Ausführungsform kann die Temperatursensorik am Auftragsschweißkopf 20 angebracht sein, während die Oberflächen/Geometrie/Positionssensorik separat davon und bspw. fest in der Maschinenkabine vorgesehen sein kann. Sie kann einen oder mehrere Laserliniensensoren oder Flächensensoren aufweisen.

Als Teil der Messvorrichtung/Sensorik 23 wird eine Speichereinrichtung angesehen, die zusammengehörige gemessene Daten (Temperatur, Ort und ggf. Zeit) einander zuordenbar speichert, um sie später verwenden zu können. Gemäß der Erfindung sollen Temperaturdaten und Geometriedaten gleicher Orte einander zuordenbar gespeichert werden. Auch werden gemäß der Erfindung Zeitdaten zuordenbar gespeichert, die den Messzeitpunkt angeben. Es entsteht auf diese Weise ein aussagekräftiges Fertigungsprotokoll, das separat ausgewertet werden kann. Es sei insoweit darauf verwiesen, dass der gleiche Werkzeugort mehrfach temperaturvermessen wird, etwa ein erstes Mal unmittelbar bei seiner Fertigung im Schmelzbad, und ein oder mehrere Male später als Ort jenseits des momentanen Fertigungsorts mit dann in der Regel geringerer Temperatur. All diese Daten können einander zuordenbar gespeichert werden.

Die Speicherung kann in bestimmten Formaten geschehen, etwa unter XML ausgezeichnet, oder jedenfalls in einer bestimmten Umgebung bzw. unter einem bestimmten Programm zuordenbar.

Insoweit wird auch ein Verfahren zur Erstellung eines Fertigungsprotokolls wie oben beschrieben als eigenständig beanspruchbarer Teil der Erfindung gesehen.

Figur 2 zeigt schematisch einen Auftragsschweißkopf. 21 ist eine Kupplung hin zur Werkzeugaufnahme 14 der Maschine 10. Sie ist vorzugsweise standardisiert ausgebildet, etwa gemäß HSK oder SK, und komplementär zur Werkzeugaufnahme 14. 24 symbolisiert den oben beschriebenen Leitungsschlepp. 22 ist der Körper des Auftragsschweißkopfs, in dessen Innerem sich die benötigten Komponenten befinden, etwa Laserlichtlenkung und -fokussierung, Steuerung und Führung der verschiedenen Medien, Aktorik, weitere Sensorik, usw.

Mit 28 sind die verschiedenen Artefakte angedeutet, mit denen der Auftragsschweißkopf 20 auf das Werkstück einwirkt. Mit 28a ist ein fokussierter Laserstrahl symbolisiert, der in der Regel zur momentanen Werkstückoberfläche hin fokussiert wird oder gezielt dagegen defokusiert ist. Zum Schutz der optischen Komponenten im Kopf ist der Laserlichtkegel 28a von einem Schutzgaskegel 28b umgeben, der durch eine Düse erzeugt wird. Noch weiter außen ist mit 28c die Zuführung des Schweißmaterials angedeutet. Beim Pulverschweißen wird das Material (Metall, Eisen, Keramik, oder ähnliches) granuliert oder pulverförmig in einem Fluidstrom zugeführt, wobei das Fluid in der Regel ein Gas bzw. Schutzgas (Argon, Stickstoff, oder ähnliches) ist. Ohne Fluid kann das Schweißmaterial auch als Draht zugeführt werden.

Mittels der Maschinenachsen 12a und 12b wird bei Benutzung der Auftragsschweißkopf 20 wie gewünscht über die Werkstückoberfläche geführt und trägt auf diese Weise Material auf. Das Material kann Eisen oder eine Eisenlegierung sein, insbesondere Stahl. Es kann sich aber auch um Keramik oder andere Materialien handeln.

Mit 27 sind Versorgungskomponenten für den Auftragsschweißkopf symbolisiert. Sie weisen eine Laserquelle 27a auf, eine Schweißmaterialquelle 27b, eine Schutzgasquelle 27c und ggf. elektronische (digitale) Komponenten 27d für den Betrieb des Auftragsschweißkopfs. Sie sind als separat neben der Maschine stehend gezeichnet. Sie können aber auch ganz oder teilweise in die Maschine integriert und nicht separat wahrnehmbar sein. Über einen externen Leitungsschlepp 26 sind sie mit der Maschine 10 verbunden. Der Betrieb des Schweißkopfs 20 und seiner elektronischen Komponenten 27d kann unter der Steuerung der allgemeinen Maschinensteuerung 19 stehen.

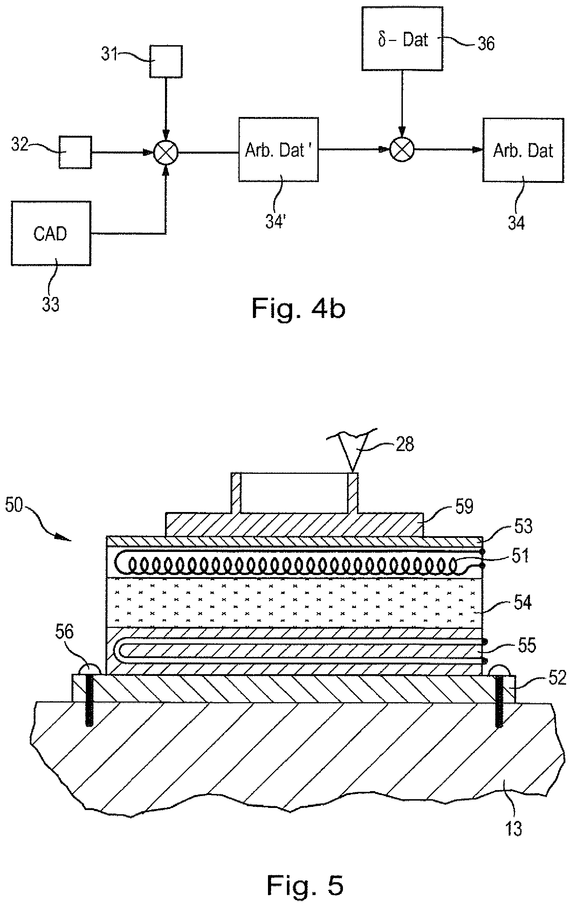

Eine weitere Hardware-Komponente ist in Figur 5 gezeigt. Es handelt sich um eine Werkstücktemperiervorrichtung 50. Sie dient dazu, Werkstücktemperaturen tendenziell eher hoch zu halten, sodass zumindest während der Werkstückherstellung beim Auftragsschweißen Temperaturgradienten von der momentanen Arbeitsstelle weg kleiner werden, sodass auch die Verhältnisse besser vorhersehbar bzw. simulierbar sind.

Die Vorrichtung 50 wird zwischen Werkstücktisch 13 und Werkstückbasis 59 eingeschoben. Sie weist einen Anbringbereich 52 auf, mittels dessen die Vorrichtung am Werkzeugtisch 13 befestigt werden kann, etwa indem sie mittels Schrauben verschraubt oder mit Spannpratzen 56 verspannt wird. Sie weist darüber hinaus weiter eine Heizung 51 auf. Sie kann elektrisch arbeiten oder mittels eines Fluids. Die Heizung kann steuerbar oder regelbar sein. Nicht gezeigt sind ggf. auch vorhandene Temperatursensoren zur Messung der Temperatur sowie deren Leitungen.

Der Werkstückbasisbereich 53 der Temperiervorrichtung 50 liegt zwischen Heizung und dem eigentlichen Werkstück. Auch er ist dazu ausgelegt, dass die Werkstückbasis 59 in geeigneter Weise daran befestigt werden kann. Er kann beispielsweise so wie ein Werkstücktisch gestaltet sein. Sowohl der Anbringbereich 52 als auch der Werkstückbasisbereich 53 können flächige Oberflächen aufweisen und können aus mehr oder minder massiven Metallplatten aufgebaut sein bzw. diese aufweisen. Die Heizung 51 heizt den Werkstückbasisbereich 53 und damit mittelbar flächig die Werkstückbasis 59. Damit wird das Werkstück gleichmäßig auf einer bestimmten Temperatur gehalten.

Weiter vorgesehen sein kann eine Isolierschicht 54 zur thermischen Isolierung der Heizung gegen den Werkstücktisch 13 und damit insgesamt die Maschine. Je nach Notwendigkeit bzw. Leistung kann auch eine Kühleinrichtung 55 vorgesehen sein, die zwischen Isolierung 54 und Anbringbereich 52 liegt. Auch sie kann nicht gezeigte Sensorik mit Leitungen aufweisen. Es kann sich um eine Fluidkühlung, etwa eine Wasserkühlung, mit entsprechenden Anschlüssen handeln.

Nicht gezeigt sind die entsprechenden Anschlüsse für Medien/Fluide/Signale/Energie. Sie sind aber natürlich vorhanden und können in Form eines Leitungsschlepps von der Temperiervorrichtung 50 weg hin zu einer nicht gezeigten Versorgungseinrichtung ausgebildet sein. Soweit der Werkzeugtisch 13 für kontinuierliche Rotation vorgesehen ist bzw. verwendet werden soll, können Leitungsschleppe nicht verwendet werden. Statt eines Leitungsschlepps können dann Durchführungen der Leitungen durch die Maschinenachsen vorgesehen sein.

Die Heizung kann zur Beheizung des Werkstückbasisbereichs bzw. der Werkstückbasis 59 auf Temperaturen von über 100° oder über 150° oder über 200° oder über 250° ausgelegt sein. Eine Obergrenze kann 400 °C oder 350 °C oder 300 °C sein.

Die allermeisten Werkstückteile werden zwar durchaus heiß sein, aber in ihrer Temperatur unter der Rotglut (bei Eisen/Stahl unter 500°C) liegen, also in der Regel unter 400 °C. Wenn dann von der Temperiervorrichtung 50 her eine Temperatur von beispielsweise 250 °C eingestellt wird, wird der Temperaturgradient längs des Werkstücks deutlich verringert, sodass die thermischen Verhältnisse vorhersehbarer sind und deshalb leichter berechnet und beim Entwerfen der Bearbeitungsdaten antizipiert werden können.

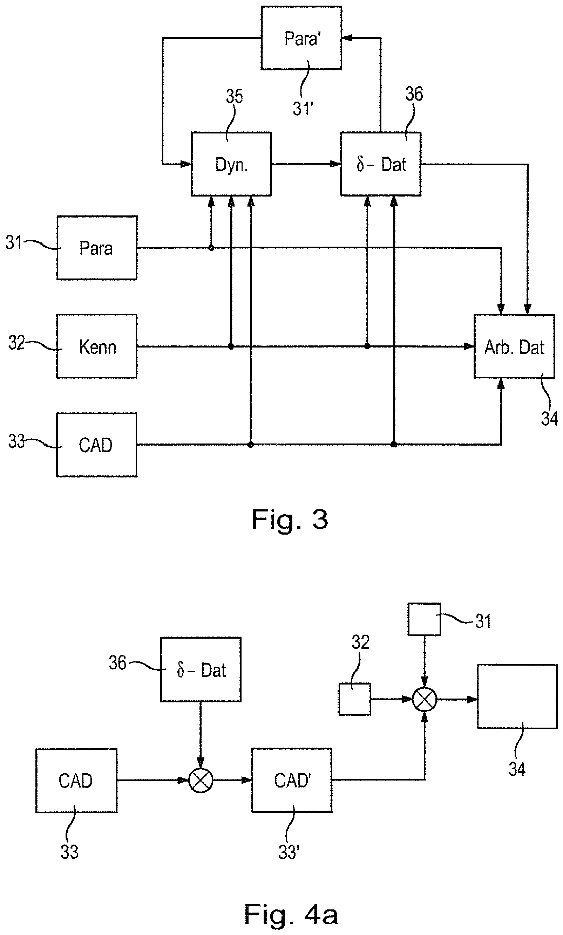

Anhand von Figur 3 wird ein Verfahren zur Erstellung von Arbeitsdaten für die Werkzeugmaschine beschrieben. Die Arbeitsdaten sind diejenigen Daten, die einer Werkzeugmaschine zugeführt werden und nach deren Maßgabe die Maschine dann die Fertigung des Werkstücks durchführt. Es kann sich bei diesen Daten um ein ausführbares Programm handeln, oder es kann sich um Daten handeln, die ein anderweitiges Programm liest, um die entsprechenden Aktivitäten durchzuführen. Allgemein können die Arbeitsdaten die Steuerung sämtlicher Aktorik umfassen, also die Steuerung der Achsen, die Steuerung der Auftragsschweißparameter, die Steuerung des Werkzeug-Handlings, die Steuerung ggf. der Temperiervorrichtung und vieles mehr. Die Arbeitsdaten können auch das Auslesen von Sensorik und die Bearbeitung von Sensorikdaten steuern.

Da, wie eingangs erläutert, Auftrangsschweißverfahren komplex dahingehend sind, dass für die maßgenaue Fertigung von Werkstücken große Temperaturveränderungen berücksichtigt werden müssen, genügt es beim Auftragsschweißen nicht, Arbeitsdaten 34 einer Werkzeugmaschine wie üblich aus Werkstückdaten 33, Prozesskenndaten 32 und wählbaren Parametern 31 heraus zu bestimmen. Vielmehr müssen Temperatureffekte berücksichtigt werden.

Die Werkstückdaten 33 können CAD-Daten sein, die aus üblichen CAD-Programmen gewonnen wurden und die ein Werkstück vektoriell oder ähnlich einer Bitmap etwa als Voxel für die Zwecke der Fertigung vollständig beschreiben.

Die Kennwerte 32 sind allgemeine Kennwerte des Auftragsschweißvorgangs. Es handelt sich hier um grundlegende Daten hinsichtlich nötiger Temperaturen, nötiger Materialflüsse, möglicher Geschwindigkeiten, nötiger Schweißleistungen, Energien, Geschwindigkeiten und ähnliches.

Die Daten 31 symbolisieren wählbare Parameter, die gesetzt werden können. Wenn beispielsweise Freiheitsgrade dahingehend gegeben sind, zwischen Fertigungsgeschwindigkeit und Fertigungsgüte wählen zu können, können hier entsprechende Angaben gemacht werden. In herkömmlichen Systemen werden aus diesen Daten Arbeitsdaten 34 erzeugt, nach deren Maßgabe dann die Werkstückfertigung erfolgt.

Daneben werden aus den genannten Parameterdaten 31, Prozesskennwerten 32 und Werkstückdaten 33 aber auch Fertigungsdynamikdaten 35 ermittelt. Diese Daten spiegeln das Entstehen des Werkstücks über der Zeitachse wieder, insbesondere Fertigungszeitpunkte bestimmter Werkstückstellen. Da Temperaturverhältnisse wegen des Temperaturausgleichs über der Zeit ganz entscheidend auch von Zeitverläufen abhängen, ist es wichtig zu wissen, wie der Werkstückaufbau über der Zeit erfolgt.

Es sei darauf hingewiesen, dass die Heizleistung im System beträchtlich sein kann. Ein Schweißlaser kann typisch mehrere 100 W bis 10 kW Leistung haben, und die Temperiervorrichtung kann Leistung in der gleichen Größenordnung eintragen. Diese Leistungen werden in Wärme umgesetzt. In der vergleichsweise kleinen Maschinenkabine (bspw. Volumen 1 m^3) wird dann bspw. mit 5 kW geheizt. Die Temperatureffekte sind deshalb beträchtlich.

Nimmt man beispielsweise an, dass mittels Auftragsschweißens ein sich nach oben öffnender Trichter zu fertigen ist, kann dieser durch spiraliges Führen des Auftragsschweißkopfs mit größer werdendem Durchmesser relativ zum momentanen Trichterrand des schon existierenden Werkstück bewerkstelligt werden. Die Fertigungsdynamikdaten geben dann an, zu welchen Zeiten bestimmte Werkstückstellen oder Werkstückbereiche gefertigt werden.

Wenn möglich, können die Fertigungsdynamikdaten 35 wie oben beschrieben auch anders als ausgehend von den gezeigten Eingangsdaten 31, 32, 33 ermittelt werden. Diese Eingangsdaten können bspw. nur teilweise genutzt werden, zum Beispiel nur die Werkstückdaten 33, um Einträge in einer Bibliothek abzurufen oder ähnliches, um so die Fertigungsdynamikdaten 35 zu generieren.

Die Fertigungsdynamikdaten 35 können dann zusammen mit weiteren Daten verwendet werden, um temperaturbezogene Daten 36 zu ermitteln. Hierbei können thermische Simulationen (finite-Elemente-Verfahren, Voxel, ...) vorgenommen werden, die Wärmeleitfähigkeiten, fortwährend den Energieeintrag durch das fortgeführte Schweißen und ggf. auch durch die Temperiereinrichtung, Energieabfluss durch Wärmeleitung und Wärmestrahlung, und ähnliches berücksichtigen. Diese Simulationen können komplex, aufwändig und rechenintensiv sein. Auf diese Weise entstehen temperaturbezogene Daten 36, die einerseits ortsauflösend Angaben direkt über die Temperatur von Werkstückteilen bzw. Werkstückbereichen machen, die dann auch zu weiteren Auswertungen herangezogen werden können, etwa zur Ermittlung von Wärmedehnungen lokal oder des gesamten Werkstücks, Temperaturgradienten und ähnlichem.

Diese temperaurbezogenen Daten 36 können ortsauflösend in der Weise vorhanden sein, dass für unterschiedliche Werkstückstellen unterschiedliche Größen vorliegen. Die Ortsauflösung kann im Bereich von besser als 10mm oder besser als 5 mm oder besser als 2 mm oder besser als 1 mm liegen. Insbesondere geben die temperaturbezogenen Daten 36 dann an, wie sich die relativ hohe Arbeitstemperatur lokal und global auf die Werkstückdimensionen während der Fertigung auswirkt. In der Regel führen die hohen Temperaturen dazu, dass das Werkstück während der Fertigung größer ist als danach, wenn die Temperaturen ausgeglichen sind.

Anhand der temperaturbezogenen Daten 36 kann dies bei der Erstellung der Arbeitsdaten 34 antizipiert werden, insbesondere dahingehend, dass das Werkstück systematisch "zu groß" gefertigt wird, was aber nach Abkühlung und Temperaturausgleich wieder zu einer richtigen Dimensionierung führen wird.

Anders als gezeigt müssen die temperaturbezogenen Daten 36 nicht erst dann errechnet werden, wenn die Fertigungsdynamikdaten 35 vollständig errechnet wurden. Vielmehr können diese auch quasi gleichzeitig ermittelt werden und als Datensätze insgesamt quasi gleichzeitig entstehen.

Wenn möglich, können die temperaturbezogenen Daten 36 wie oben beschrieben auch anders als ausgehend von den gezeigten Eingangsdaten (31, 32, 33, 35) ermittelt werden. Die Eingangsdaten können bspw. nur teilweise genutzt werden, zum Beispiel nur die Werkstückdaten 33, um Einträge in einer Bibliothek abzurufen oder ähnliches, um so die temperaturbezogenen Daten 36 zu generieren.

Wie in Figur 4a gezeigt, ist es eine Möglichkeit, die temperaturbezogenen Daten 36 dazu zu verwenden, die Werkstückdaten 33 (Solldaten) auf die bei der Fertigung herrschenden Temperaturen umzurechnen. Es wird auf diese Weise ein in der Regel entsprechend der thermischen Ausdehnung größeres "Soll" ermittelt. In Figur 4a ist dies mit 33' angedeutet. Dieses größere Soll 33' wird dann mit den übrigen Daten zur Generierung der Arbeitsdaten 34 verwendet.

Eine andere Möglichkeit der Verwendung der temperaturbezogenen Daten 36 ist in Figur 4b schematisch gezeigt. Hier werden die schon ermittelten Arbeitsdaten 34' als vorläufig angesehen und entsprechend den Temperaturdaten 36 auf die tatsächlich herrschenden Temperaturen umgerechnet. In der Regel wird dies auch zu einer Vergrößerung der Gesamtdimensionen entsprechend der thermischen Expansion während der Fertigung führen.

In einem weiteren Fall können bei der Erstellung von Arbeitsdaten auch Rekursionen hinsichtlich der Temperaturverhältnisse stattfinden. Wenn in einem ersten Durchlauf temperaturbezogene Daten 36 ermittelt werden, können diese (etwa lokale Temperatur, lokaler Gradient) anhand von Grenzwerten bzw. Sollbereichen überprüft werden. Beispielsweise kann überprüft werden, ob es zu Überhitzungen kommt, feststellbar an sehr bzw. zu hohen Temperaturen. Dies kann beispielsweise bei kleinen Werkstücken oder feinen Werkstückstrukturen passieren, bei denen die Schweißlaserleistung lange in eine umgrenzte Region eingetragen wird. Werden Grenzwertüberschreitungen festgestellt, können modifizierte Parameter generiert werden, etwa ein schneller Vorschub oder eine verringerte Laserleistung, die dann wiederum zu geänderten Dynamikdaten (nicht gezeigt in Fig. 3) führen, die ihrerseits zu geänderten temperaturbezogenen Daten führen.

Anhand der temperaturbezogenen Daten 36 bzw. anhand des Ergebnisses der Überprüfung derselben können auch direkt Änderungen in den Arbeitsdaten 34 vorgenommen werden, etwa dahingehend, dass von einem Bearbeitungsort am Werkstück, der zu überhitzen droht, falls möglich zunächst zu einem anderen gesprungen wird, um dort weiterzuarbeiten, damit der frühere Ort abkühlen kann, bevor dort weitergearbeitet wird.

Auf diese Weise kann der in den Arbeitsdaten 34 reflektierte Fertigungsplan des Werkstücks dahingehend optimiert werden, dass die sich aus den komplexen thermischen Verhältnissen ergebenden Schwierigkeiten verringert werden. Es entstehen auf diese Weise Arbeitsdaten 34, die das thermische Verhalten des durch Auftragsschweißen zu fertigenden Werkstücks gut antizipieren und Überhitzungen vermieden werden sodass schlussendlich ein maßgenaues Werkstück gefertigt werden kann.

Das soweit beschriebene Verfahren geht von einem störungsfreien Verlauf der Werkstückfertigung aus ("planmäßiger Verlauf"). Die so erstellten Arbeitsdaten 34 stimmen aber nicht mehr, wenn der Fertigungsverlauf unplanmäßig ist, etwa weil Systemstörungen aufgetreten sind. Beispielsweise kann die Materialzufuhr gestört sein und es auf diese Weise zu einem halbstündigen Systemstillstand kommen. In dieser Zeit finden Temperaturausgleichsvorgänge statt, die dazu führen, dass thermische Verhältnisse völlig anders sind als für den störungsfreien Verlauf angenommen.

Um in einer solchen Situation das qualitativ hochwertige (insbesondere zuletzt maßhaltige) Weiterarbeiten mittels Auftragsschweißens zu ermöglichen, können mehrere Sätze temperaturbezogener Daten ermittelt werden. Beispielsweise können an zwei oder drei oder mehreren (allgemein n) Stellen des Werkstücks Unterbrechungen angenommen werden, die beispielsweise 2 oder 5 oder 10 oder 20 Minuten (allgemein: m verschiedene Zeitdauern) dauern. Für diese Möglichkeiten können dann mehrere (n × m) Sätze temperaturbezogener Daten ermittelt werden, die ihrerseits zu weiteren (n × m) Sätzen modifizierter Arbeitsdaten weitergerechnet werden können. Diese modifizierten Sätze sind dann vorrätig und können bei Bedarf verwendet werden. Es können dann Interpolationen hinsichtlich Ort und Zeitdauer der Unterbrechung vorgenommen werden. Auf diese Weise ist es möglich, auch im gestörten Ablauf des Auftragsschweißvorgangs qualitativ hochwertig die Werkstückfertigung fortzusetzen.

Nachfolgend wird ein Auftragsschweißverfahren beschrieben. Es wird mit einem Auftragsschweißkopf 20 in einer computergesteuerten Werkzeugmaschine 10 ausgeführt, die wie beschrieben ausgebildet sein kann. Vor Fertigungsbeginn werden der Maschine Arbeitsdaten 34 zugeführt, die wie oben beschrieben erzeugt worden sein können. Nach Maßgabe dieser Daten (Arbeitsdaten 34) und weiterer Daten werden die Maschine und die Komponenten darin während der Werkstückfertigung von der Steuerung 19 angesteuert. Parallel zur Fertigung werden Messungen von der Messvorrichtung/Sensorik 23 vorgenommen. Die Messungen umfassen die Geometrievermessung des bisher gefertigten Werkstücks, etwa indem in bestimmter Auflösung Oberflächenpunkte vorzugsweise dreidimensional (x, y, z) vermessen werden, und Temperaturmessungen, die auch ortsauflösend sind. Die Ortsauflösung der Oberflächenvermessung (Geometrievermessung) kann eine andere sein als bei der Temperaturmessung. Die Messungen erfolgen aber jedenfalls in einander zuordenbarer Weise, sodass dem System bekannt ist, an welchem Ort welche Temperaturen herrschen.

Sowohl die Ortmessergebnisse wie auch die Temperaturmessergebnisse können zur Steuerung/Regelung der Werkstückfertigung herangezogen werden. Insbesondere können sie zur Modifizierung des durch die Arbeitsdaten 34 vorgegebenen Fertigungsfortschritts führen. Die Arbeitsdaten können als regelungstechnische Sollwerte ausgelegt sein, deren Einhaltung mittels der rückgeführten Sensorik bewirkt wird.

Ein Teil der Temperaturmessung kann die Messung der Temperatur des momentanen Schweißschmelzbads sein. Ziel ist es, diese Temperatur in einem bestimmten Bereich zu halten. Wenn die Temperatur beispielsweise zu hoch wird, können Eingriffe in die Maschinensteuerung erfolgen, etwa dahingehend, dass die Laserleistung (Schweißleistung) reduziert wird oder dass die Vorschubgeschwindigkeit und/oder die Materialzufuhr beim Auftragsschweißkopf 20 so geändert werden, dass sich geringeren Temperaturen ergeben. Sinngemäß umgekehrt kann bei zu geringen Schmelzbadtemperaturen vorgegangen werden.

Wenn die Ortsmessdaten Abweichungen zum Soll ergeben, können auch Eingriffe erfolgen. Wenn beispielsweise die aufgetragene Schichtstärke zu dick wird, können Laserleistung und Materialzufuhrrate verringert werden, oder es kann die Vorschubgeschwindigkeit erhöht werden, und sinngemäß umgekehrt.

Allgemein können nach Maßgabe der Messergebnisse der Temperaturmessung und/oder der Geometrie- bzw. Oberflächenvermessung des bisher gefertigten Werkstücks folgende Systemparameter gesteuert werden: Die Schweißheizleistung, insbesondere die Laserleistung, die Materialzufuhrrate (Masse pro Zeit), die Materialzufuhrgeschwindigkeit (Meter pro Sekunde), die Laserfokussierung, die Führungsgeschwindigkeit des Auftragsschweißkopfs relativ zum Werkstück und die Durchflußrate von Trägergas und Schutzgas.

Die Messungen von zugeordneten Geometriedaten und Temperaturdaten können auch fortlaufend gespeichert werden. Auf diese Weise entsteht ein auswertbares Fertigungsprotokoll. Die Speicherung erfolgt so, dass Temperatur- und Geometrie-/Oberflächenpunktdaten einander zuordenbar sind. Gemäß der Erfindung werden zugehörige Zeitdaten zuordenbar gespeichert. Es liegt dann eine Geometrie-, Temperatur- und Zeithistorie der Werkstückfertigung vor, die zu Auswertungszwecken herangezogen werden kann. Insbesondere können die Auswertungsergebnisse dazu verwendet werden, modifizierte Arbeitsdaten 34 zu erzeugen, die zu einer optimierten Werkstückfertigung führen. Die gespeicherten Daten können auch dazu verwendet werden, Werkstückqualitäten abzuschätzen und entsprechende Daten zu erzeugen.

Wenn ungeplante Umstände dazu führen, dass die Fertigung anders verläuft als geplant, insbesondere verzögert, ist dies anhand eines Vergleichs des Ist-Zeitverlaufs mit einem angenommenen störungsfreien Verlauf feststellbar. Wird eine Störung festgestellt, können modifizierte Arbeitsdaten ermittelt werden oder, soweit vorhanden, vorab erzeugte modifizierte Arbeitsdaten verwendet werden, wie schon weiter oben beschrieben.

Allgemein kann das bisher beschriebene Auftragsschweißverfahren in Kombination mit Abtragsverfahren verwendet werden, wobei beide Verfahren in der gleichen Maschine ohne Wechsel der Einspannung des Werkstücks durchgeführt werden. Die Fertigungsgenauigkeit des Auftragsschweißens reicht in bisheriger Technologie nicht an die Fertigungsgenauigkeit spanender Bearbeitungen wie Fräsen, Bohren oder Drehen oder besonderer Bearbeitungen wie Laserabtrag, Ultraschallbearbeitung heran. Deswegen ist es derzeit eine Strategie, mittels Laserauftragsschweißens einen Werkstückrohling rundum "zu groß" zu fertigen, der dann nachträglich durch konventionelle abtragende Bearbeitung auf das gewünschte Endmaß gebracht wird. Anders als in den meisten konventionellen Bearbeitungen wird dann, wenn lange Wartezeiten nach dem Auftragsschweißen vermieden werden sollen, das konventionelle Abtragen in vergleichsweise heißer Umgebung stattfinden, bspw. bei 200°C oder 300°C. Auch insoweit sind dann die genannten Temperatureffekte insbesondere hinsichtlich thermischer Ausdehnung bzw. Schrumpfung zu berücksichtigen. Auch können andere Abtragseigenschaften aufgrund der anderen (höheren) Temperaturen vorliegen, die zu berücksichtigen sind.

Der alternierende Ansatz von einerseits Auftragsschweißen und andererseits Materialabtrag kann in einem einzigen Fertigungsprogramm abgelegt sein, was im Sinne dieser Beschreibung gemeinsame Fertigungsdaten 34 sind, die dann also abwechselnd den Betrieb des Auftragsschweißkopfs und des abtragenden Werkzeugs und dazwischen der Werkzeugwechselmechanismen steuern. In dem in Figur 3 angedeuteten Verfahren sind dann nicht nur die Kennwerte und Vorgaben des Auftragsschweißens zu berücksichtigen, sondern auch diejenigen des materialabtragenden Verfahrens. Die insoweit vorzunehmenden Arbeitsschritte des Materialabtrags haben natürlich auch thermische Auswirkungen dahingehend, dass das Werkstück sich vermutlich abkühlen wird. Dies wiederum wirkt sich auf die Geometrie während der Fertigung aus und muss sowohl während des Materialabtrags als auch während des sich möglicherweise anschließenden weiteren Materialaufbaus durch Auftragsschweißen berücksichtigt werden. Dies kann anhand der schon beschriebenen Fertigungsdynamikdaten 35 und der daraus abgeleiteten temperaturbezogenen Daten 36 erreicht werden.

Nachfolgend werden mögliche Dimensionen, Werte und Größenordnungen der beschriebenen Erfindung aufgezählt:
Werkstückgesamtgröße: > 20 mm, > 50 mm oder > 100 mm, ggf. < 1000 mm, < 500 mm.
Auftragsschweißleistung: > 500 W, > 1000 W, > 2000 W, < 20.000 W, < 10.000 W.
Materialauftragsrate: > 0.1 g/min, > 0,5 g/min, > 2 g/min, < 200 g/min, < 100 g/min.
Schweißmaterialien: Eisen, Stahl, Nickel-Basis-Legierungen, Chromkobalt, Stellite, allgemein metallische Legierungen, Keramik.
Schweißtemperatur an der momentanen Arbeitsstelle: bei Stahl 1.400 bis 1.600 °C, bei Keramik 1.100 °C bis 2.500 °C.
Werkstücktemperatur jenseits der momentanen Arbeitsstelle: > 50 °C, > 100 °C, >200 °C, bei Metall < 500 °C.
Vorschubgeschwindigkeit des Laserschweißkopfs relativ zum Werkstück > 0,1 m/min, > 0,2 m/min, > 0,5 m/min, < 5 m/min, < 5 m/min.

Merkmale, die in dieser Beschreibung dargestellt sind, sind auch dann als miteinander kombinierbar zu verstehen, wenn deren Kombination nicht ausdrücklich beschrieben ist, soweit die Kombination technisch möglich und sinnvoll ist. Beschreibungen von Verfahrensschritten sind auch als Beschreibungen von diese Verfahrensschritte implementierenden Vorrichtungen zu verstehen, und umgekehrt. Weiterhin ist die Beschreibung von Steuerungsverfahren auch als Beschreibung von diese Steuerungsverfahren implementierender Software zu verstehen. Insoweit sind Software und Datenträger mit Software darauf als eigenständiger Teil der Erfindung zu verstehen.

## Patentansprüche

1. Werkzeugmaschine (10) mit
einer Maschinensteuerung (19),
einem Maschinenrahmen (11),
einem Werkstücktisch (13),
einer vorzugsweise nach einer Norm ausgebildeten Werkzeugaufnahme (14),
mehreren translatorischen und/oder rotatorischen Achsen (12a, 12gb) zur Einstellung einer relativen Lage zwischen Werkstücktisch (13) und Werkzeugaufnahme (14),
einem Werkzeugmagazin (16) für ein oder mehrere materialabtragende, insbesondere spanende Werkzeuge (15),
und **gekennzeichnet durch** folgende Merkmale:
ein erster Werkzeugwechselmechanismus zum automatischen Verbringen von Werkzeugen zwischen Werkzeugaufnahme (14) und Werkzeugmagazin (16), der einen automatisch arbeitenden Arm (17) zum Verbringen des Werkzeugs (15) zwischen Werkzeugaufnahme (14) und Werkzeugmagazin (16) aufweisen kann,
einen in die Werkzeugaufnahme (14) einsetzbaren Auftragsschweißkopf (20), und
eine Lagereinrichtung (25) zum Lagern des Auftragsschweißkopfs jenseits der Werkzeugaufnahme (14), wobei die Lagereinrichtung (25) jenseits des Werkzeugmagazins vorgesehen sein kann, und wobei der Auftragsschweißkopf (20) automatisch von der Werkzeugaufnahme (14) in die Lagereinrichtung (25) bringbar und aus ihr entnehmbar ist,
wobei die Werkzeugmaschine eine Messvorrichtung zum Vermessen eines Werkstücks aufweist, mit
einer Positionsmesseinrichtung zum Ermitteln von Positionsdaten, vorzugsweise in drei Dimensionen, von Oberflächenpunkten eines Werkstücks,
einer Temperaturmesseinrichtung zum Ermitteln von Temperaturdaten betreffend die Temperatur an einem Oberflächenpunkt zeitnah zur Vermessung des Punkts mit der Positionsmesseinrichtung, und
einer Speichereinrichtung zum Speichern von Positions- und Temperaturdaten sowie von Messzeitpunkte betreffenden Zeitdaten mehrerer Oberflächenpunkte in zueinander zuordenbarer Weise, wobei die Speichereinrichtung eingerichtet ist, mehrere Messzeitpunkte und Messwerte der Temperatur eines gleichen Oberflächenpunkts zu speichern.

2. Werkzeugmaschine nach Anspruch 1, bei der die Temperaturmesseinrichtung eine ortsauflösende Wärmebildkamera aufweisen kann und am Auftragsschweißkopf angebracht sein kann, und bei der die Positionsmesseinrichtung einen Laserliniensensoren oder Flächensensoren aufweisen kann und in der Arbeitskabine der Maschine angebracht sein kann.

3. Werkzeugmaschine nach Anspruch 1 oder 2, wobei die Lagereinrichtung (25) eine Verfahreinrichtung (29) aufweist zum translatorischen und/oder rotatorischen Verfahren des gelagerten Auftragsschweißkopfs (20) zwischen einer Parkposition und einer Wechselposition, die von der Werkzeugaufnahme (14) angefahren werden kann zum Aufnehmen bzw. Abgelegen des Auftragsschweißkopfs (20), und
mit einer Abschirmung (28) zum Abschirmen des in der Lagereinrichtung (25) in der Parkposition gelagerten Auftragsschweißkopfs (20) gegen Prozesseinflüsse.

4. Werkzeugmaschine nach Anspruch 1, 2 oder 3, wobei der Auftragsschweißkopf (20) ein oder mehrere der folgenden Merkmale aufweist:
eine vorzugsweise einen Laserstrahl(28a) verwendende Verschweißeinrichtung,
eine Schweißmaterialzufuhr(28c) zum Zuführen von Metall zur Auftragsschweißstelle, wobei die Zufuhr zum Zuführen eines Drahts oder von Metallpartikeln mit einem Fluidstrom ausgelegt sein kann,
eine Schutzgaszufuhr(28b),
Temperatursensorik und/oder Positionssensorik (23),
einen flexiblen Leitungsschlepp (24) zum Zuführen von Laserlicht und/oder Schweißgasmaterial und/oder Schutzgas und/oder elektrischer Energie und/oder elektrischen Signalen.

5. Auftragsschweißverfahren, das mit einem Auftragsschweißkopf in einer computergesteuerten Werkzeugmaschine nach einem der Ansprüche 1 bis 4 durchführbar ist, zur Fertigung eines Werkstücks, mit den Schritten
Erzeugen von Arbeitsdaten für das Auftragsschweißen,
Ansteuern der Maschine nach Maßgabe der Arbeitsdaten,
und **gekennzeichnet durch** folgende Schritte:
während der Fertigung ortsauflösende Messung von Temperaturen und Werkstückoberflächenpositionen durch Erstellen eines Fertigungsprotokolls für ein in einer Auftragsschweißmaschine, gefertigtes Werkstück, mit den Schritten
- Ermitteln von Positionsdaten, vorzugsweise in drei Dimensionen, von Oberflächenpunkten des Werkstücks,
- Ermitteln von Temperaturdaten betreffend die Temperatur an einem Oberflächenpunkt an einem ersten Messzeitpunkt zeitnah zur Ermittlung der Positionsdaten des Punktes,
- Ermitteln von Temperaturdaten betreffend die Temperatur an dem Oberflächenpunkt zu wenigstens einem zweiten Messzeitpunkt; und
- Speichern von Positions- und Temperaturdaten sowie Messzeitpunkten mehrerer Oberflächenpunkte in zueinander zuordenbarer Weise, wobei zu einem gleichen Oberflächenpunkt mehrere Messwerte der Temperatur und Messzeitpunkte gespeichert werden,
Überprüfen der Messwerte, und
nach Maßgabe des Überprüfungsergebnisses Modifizieren eines oder mehrerer der folgenden Arbeitsparameter:
Vorschubgeschwindigkeit relativ zwischen Auftragsschweißkopf und Werkstück,
Schweißheizleistung,
Materialzufuhrrate,
Materialzufuhrgeschwindigkeit, Laserfokussierung.

6. Verfahren nach Anspruch 5, bei dem die Temperatur an der momentanen Auftragsschweißstelle gemessen und auf eine gewünschte Größe oder in einen gewünschten Bereich geführt wird.

7. Verfahren nach Anspruch 5 oder 6, bei dem der zeitliche Fortschritt der Fertigung und/oder Temperaturdaten des bisher gefertigten Werkstücks mit entsprechenden Sollwerten und/oder Sollwertbereichen verglichen werden, wobei dann, wenn Abweichungen festgestellt werden, geänderte Arbeitsdaten für die weitere Werkstückfertigung erzeugt werden.

8. Verfahren nach einem der Ansprüche 5 bis 7, bei dem alternierend Laserauftragsschweißen und eine materialabtragende Bearbeitung ohne Wechsel der Aufspannung des Werkstücks erfolgen, indem in der Werkzeugmaschine der Auftragsschweißkopf und ein materialabtragendes Werkzeug gegeneinander ausgetauscht werden, wobei ein späterer Laserauftrag und/oder ein Materialabtrag Bezug nehmend auf das Fertigungsprotokoll erfolgen kann.

## Claims

1. A machine tool (10) with
a machine controller (19),
a machine frame (11),
a workpiece table (13),
a tool holder (14), preferably designed according to a standard,
a plurality of translatory and/or rotatory axes (12a, 12gb) for adjusting a relative position between the workpiece table (13) and the tool holder (14),
a tool magazine (16) for one or more material-removing, in particular cutting, tools (15),
and **characterised by** the following features:
a first tool changing mechanism for automatically moving tools between the tool holder (14) and the tool magazine (16), which may comprise an automatically operating arm (17) for moving the tool (15) between the tool holder (14) and the tool magazine (16),
a cladding welding head (20) insertable into the tool holder (14), and
a storage device (25) for storing the cladding welding head beyond the tool holder (14), wherein the storage device (25) may be provided beyond the tool magazine, and wherein the cladding welding head (20) is adapted to be automatically brought into the storage device (25) from the tool holder (14) and removed therefrom,
wherein the machine tool comprises a measuring device for measuring a workpiece, with
a position measuring device for determining position data, preferably in three dimensions, of surface points of a workpiece,
a temperature measuring device for determining temperature data concerning the temperature at a surface point close in time to the measurement of the point using the position measuring device, and
memory means for storing position data, temperature data and measurement timing data of a plurality of surface points in a mutually associable manner,
wherein the memory means is adapted to store a plurality of measurement times and measurement values of the temperature of a same surface point.

2. The machine tool as claimed in claim 1, wherein the temperature measuring device may comprise a spatially resolving thermal imaging camera and may be mounted on the cladding welding head, and wherein the position measuring device may comprise a laser line sensor or area sensors and may be mounted in the working cabin of the machine.

3. The machine tool according to claim 1 or 2, wherein the storage device (25) comprises a displacement device (29) for translatory and/or rotatory displacement of the stored cladding welding head (20) between a parking position and a change position which can be approached by the tool holder (14) for picking up and depositing the application welding head (20), respectively, and
comprising a shield (28) for shielding the cladding welding head (20) stored in the storage device (25) in the parking position against process influences.

4. The machine tool according to claim 1, 2 or 3, wherein the cladding welding head (20) has one or more of the following features:
a welding device, preferably using a laser beam (28a),
a welding material supply (28c) for supplying metal to the cladding welding spot, which supply may be adapted to supply a wire or metal particles with a fluid flow,
a protective gas supply (28b),
temperature sensing and/or position sensors (23),
a flexible conduit tow (24) for supplying laser light and/or welding gas material and/or protective gas and/or electrical energy and/or electrical signals.

5. A cladding welding method adapted to be carried out with a cladding welding head in a computer-controlled machine tool according to any one of claims 1 to 4, for the manufacture of a workpiece, comprising the steps of
generating work data for cladding welding,
controlling the machine in accordance with the work data, and **characterised by** the following steps:
during production, spatially resolving measurement of temperatures and workpiece surface positions by producing a production record for a workpiece produced in a cladding welding machine, comprising the steps of
- determining position data, preferably in three dimensions, of surface points of the workpiece,
- determining temperature data relating to the temperature at a surface point at a first measuring instant close in time to the determination of the position data of the point,
- determining temperature data concerning the temperature at the surface point at at least a second measuring instant; and
- storing position and temperature data as well as measurement times of several surface points so as to be assignable to each other, whereby several measured values of the temperature and measurement times are stored for the same surface point, checking the measured values, and
modifying one or more of the following working parameters in accordance with the check result:
relative feed rate between the cladding welding head and the workpiece,
welding heating power,
material feed speed,
material feed rate,
laser focusing.

6. The method according to claim 5, in which the temperature at the instantaneous cladding welding point is measured and is brought to a desired magnitude or range.

7. The method according to claim 5 or 6, in which the progress of manufacture over time and/or temperature data of the workpiece manufactured so far are compared with corresponding set values and/or set value ranges, whereby, if deviations are detected, modified work data for further workpiece manufacture are generated.

8. The method according to one of claims 5 to 7, in which laser cladding welding and material-removing machining operations are performed alternately without changing the clamping of the workpiece by exchanging the cladding welding head and a material-removing tool for one another in the machine tool, wherein a subsequent laser cladding welding operation and/or material-removing operation can be performed with reference to the production record.

## Revendications

1. Machine-outil (10) comprenant
une commande de machine (19),
un bâti de machine (11),
une table porte-pièce (13),
un porte-outil (14), de préférence réalisé selon une norme, plusieurs axes de translation et/ou de rotation (12a, 12gb) pour régler une position relative entre la table porte-pièce (13) et le porte-outil (14),
un magasin d'outils (16) pour un ou plusieurs outils (15) enlevant du matériau, en particulier des outils d'usinage,
et **caractérisé par** les caractéristiques suivantes :
un premier mécanisme de changement d'outil pour le transfert automatique d'outils entre le porte-outil (14) et le magasin d'outils (16), qui peut présenter un bras (17) fonctionnant automatiquement pour le transfert de l'outil (15) entre le porte-outil (14) et le magasin d'outils (16),
une tête de soudage par rechargement (20) apte à être insérée dans le porte-outil (14), et
un dispositif de stockage (25) pour stocker la tête de soudage par rechargement au-delà du porte-outil (14), le dispositif de stockage (25) pouvant être prévu au-delà du magasin d'outils, et la tête de soudage par rechargement (20) étant susceptible d'être amenée automatiquement depuis le porte-outil (14) dans le dispositif de stockage (25) et d'en être retirée,
la machine-outil présentant un dispositif de mesure pour mesurer une pièce à fabriquer, avec
un dispositif de mesure de position pour déterminer des données de position, de préférence en trois dimensions, de points de surface d'une pièce à fabriquer,
un dispositif de mesure de température pour déterminer des données de température concernant la température en un point de la surface à proximité temporelle de la mesure du point avec le dispositif de mesure de position, et
un dispositif de mémoire pour mémoriser des données de position et de température ainsi que des données temporelles concernant des instants de mesure de plusieurs points de surface d'une manière permettant de les associer les unes aux autres,
le dispositif de stockage étant adapté pour stocker plusieurs points de mesure et valeurs de mesure de la température d'un même point de surface.

2. Machine-outil selon la revendication 1, dans laquelle le dispositif de mesure de la température peut comprendre une caméra thermique à résolution locale et peut être monté sur la tête de soudage par rechargement, et dans laquelle le dispositif de mesure de position peut comprendre un capteur de ligne laser ou des capteurs de surface et peut être monté dans la cabine de travail de la machine.

3. Machine-outil selon la revendication 1 ou 2, dans laquelle le dispositif de stockage (25) présente un dispositif de déplacement (29) pour le déplacement en translation et/ou en rotation de la tête de soudage par rechargement (20) stockée entre une position de stationnement et une position de changement qui peut être approchée par le porte-outil (14) pour la prise ou la dépose de la tête de soudage par rechargement (20), et
avec un blindage (28) pour protéger contre les influences du processus la tête de soudage par rechargement (20) logée dans le dispositif de stockage (25) dans la position de stationnement .

4. Machine-outil selon la revendication 1, 2 ou 3, dont la tête de soudage par rechargement (20) présente une ou plusieurs des caractéristiques suivantes :
un dispositif de soudage utilisant de préférence un faisceau laser (28a),
une alimentation en matériau de soudage (28c) pour alimenter en métal le point de soudage par apport de matériau, l'alimentation pouvant être configurée pour alimenter un fil ou des particules de métal avec un flux de fluide,
une alimentation en gaz de protection (28b),
des capteurs de température et/ou des capteurs de position (23),
une traîne de conduite flexible (24) pour l'alimentation en lumière laser et/ou en matériau de gaz de soudage et/ou en gaz de protection et/ou en énergie électrique et/ou en signaux électriques.

5. Procédé de soudage par rechargement, qui peut être mis en oeuvre pour la fabrication d'une pièce en utilisant une tête de soudage par rechargement dans une machine-outil à commande numérique selon l'une des revendications 1 à 4, comprenant les étapes consistant à:
générer des données de travail pour le soudage par rechargement,
commander la machine en fonction des données de travail,
**caractérisé par** les étapes consistant à:
mesurer, pendant la fabrication, de températures et de positions de la surface de la pièce avec une résolution locale, en établissant un protocole de fabrication pour une pièce fabriquée dans une machine de soudage par rechargement, avec les étapes consistant à:
- déterminer des données de position, de préférence en trois dimensions, de points de surface de la pièce à fabriquer,
- déterminer des données de température concernant la température en un point de surface à un premier instant de mesure temporellement proche de la détermination des données de position du point,
- déterminer des données de température concernant la température au point de surface à au moins un deuxième instant de mesure ; et
- enregistrer les données de position et de température ainsi que les instants de mesure de plusieurs points de surface de manière à pouvoir les associer entre eux, plusieurs valeurs de mesure de la température et instants de mesure étant enregistrés pour un même point de surface,
vérifier les valeurs de mesure, et
en fonction du résultat de la vérification, modifier un ou plusieurs des paramètres de travail suivants :
vitesse d'avance relative entre la tête de soudage et la pièce à fabriquer,
puissance de chauffage de soudage,
taux d'alimentation en matériau,
vitesse d'alimentation du matériau,
focalisation du laser.

6. Procédé selon la revendication 5, dans lequel la température est mesurée à l'endroit actuel du rechargement et est amenée à une valeur ou à une plage souhaitée.

7. Procédé selon la revendication 5 ou 6, dans lequel la progression temporelle de la fabrication et/ou les données de température de la pièce fabriquée jusqu'à présent sont comparées à des valeurs de consigne correspondantes et/ou à des plages de valeurs de consigne, des données de travail modifiées étant alors générées pour la poursuite de la fabrication de la pièce si des écarts sont constatés.

8. Procédé selon l'une des revendications 5 à 7, dans lequel le soudage par rechargement au laser et un usinage par enlèvement de matériau s'effectuent en alternance sans changer le serrage de la pièce, en remplaçant l'un par l'autre dans la machine-outil la tête de soudage par rechargement et un outil d'enlèvement de matériau, un rechargement au laser et/ou un enlèvement de matériau ultérieurs pouvant s'effectuer en référence au protocole de fabrication.
